# FASCICULE DE BREVET EUROPEEN

(11) **EP 2 962 942 B1**
(45) Date de publication et mention de la délivrance du brevet: **27.03.2019**
(21) Numéro de dépôt: 15174949.6
(22) Date de dépôt: 02.07.2015
(51) Int. Cl.: B64G 1/10

(54) **SATELLITE À MAÎTRE COUPLE VARIABLE**
SATELLIT MIT VARIABLER STIRNFLÄCHE
SATELLITE WITH VARIABLE MAIN CROSS-SECTION

(30) Priorité: 04.07.2014 FR 1401506
(43) Date de publication de la demande: 06.01.2016
(73) Titulaire: THALES, 92400 Courbevoie (FR); CENTRE NATIONAL D'ETUDES SPATIALES, 75001 Paris (FR)
(72) Inventeur: NANN, Isabelle, 06150 CANNES LA BOCCA (FR); MOSSON, Nicolas, 31000 TOULOUSE (FR)
(74) Mandataire: Dudouit, Isabelle

(56) Documents cités:
- US-A1- 2003 057 328
- US-A1- 2010 020 742
- US-B2- 8 448 902

## Description

L'invention concerne un satellite à maître couple variable. Elle est utilisée, par exemple, dans le domaine des satellites de communication, ou celui des satellites pour l'observation.

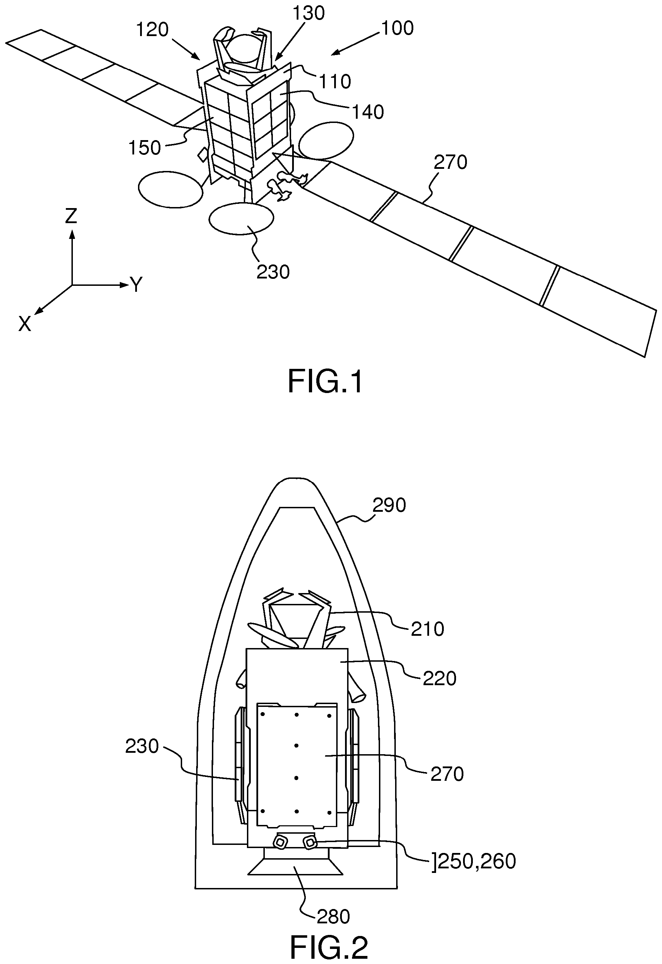

Dans la présente invention l'expression «maitre couple » désigne une surface vue lorsque l'on regarde le satellite selon un axe Z tel que défini à la figure 1.

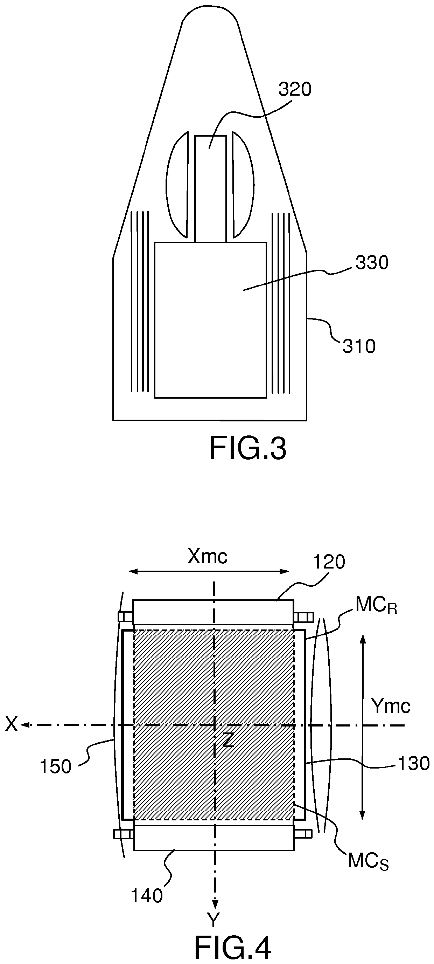

La figure 1 schématise un satellite 100 stabilisé dans une configuration orbitale et par rapport à un repère trois axes conventionnels, x, y, z. L'axe X correspond au roulis ou en anglo-saxon « rolling », l'axe Y au tangage ou « pitch » et l'axe Z au lacet ou yaw. L'axe Z de manière conventionnelle est défini comme une ligne passant par le centre de gravité du satellite et le centre de gravité de la terre, l'axe de roulis X est défini comme un axe perpendiculaire à l'axe Z dans le plan de l'orbite et dans la direction du vecteur vitesse du satellite et l'axe de tangage Y est défini comme la normale au plan d'orbite, les trois axes formant un repère orthogonal direct. Le satellite 100 est composé d'un corps 110 ayant une forme cubique rectangulaire. Un premier panneau 120, orthogonal à l'axe Y correspond au panneau nord lorsque le satellite est dans une position orbitale, et sera référencé panneau « nord ». Un deuxième panneau 150 orthogonal à l'axe X peut être référencé panneau « est ». Un troisième panneau 140 ou panneau « sud » et un quatrième panneau 130 ou panneau « ouest » sont disposés respectivement à l'opposé du premier panneau nord 120 et du deuxième panneau est 150. Le panneau nord et le panneau sud ont des largeurs L_{EO} dans la direction est-ouest qui peuvent correspondre sensiblement à la distance Xmc entre les panneaux est/ouest (figure 4), le panneau est et le panneau ouest ont une largeur L_{NS} dans la direction nord-sud correspondant sensiblement à une distance Ymc (figure 4) entre le panneau nord et le panneau sud. Les deux panneaux nord et sud peuvent avoir des extensions qui dépassent des panneaux est et ouest.

Le corps du satellite peut comporter les équipements nécessaires au fonctionnement défini ou à la mission. Le satellite est par exemple composé des modules suivants, figure 2 :
- un module de charge utile 200 qui est composé d'un module antenne 210, d'un module répéteur 220 et des panneaux portant les radiateurs thermiques non représentés, les antennes latérales 230, les appendices nécessaires à la mission,
- un module de service 240 qui est composé d'un ou de plusieurs modules propulsion 250, d'un module avionique 260 connu de l'homme du métier,
- d'un ou plusieurs modules ou panneaux solaires 270.

La figure 2 représente le satellite positionné sur un support 280 dans un lanceur 290 dans une configuration de lancement connue de l'homme du métier.

Lorsque des dimensions de caisse sont définies pour une plate-forme de lancement, elles restent fixes pour tous les satellites de la gamme et pour tous les satellites fabriqués à partir d'un point de gamme. Par exemple, toutes les plateformes de Thales Alenia Space dénommées « spacebus » ont un maître-couple de 2.2*2.0 m² quelle que soit la mission envisagée.

Afin d'optimiser le coût des équipements, il existe donc actuellement un besoin de disposer d'un satellite qui permettait d'avoir le meilleur compromis entre la surface d'aménagement externe, la surface d'aménagement du répéteur et la surface radiative et qui pourrait être lancé à partir de dispositifs de lancement conventionnels.

Une manière de procéder connue de l'art antérieur consiste à changer de point de gamme ou de taille de satellite, lorsque l'un des trois éléments suivants ne peut être optimisé de manière satisfaisante: 1) la surface d'aménagement externe au satellite, 2) la surface d'aménagement du module répéteur en nord/sud et 3) la surface radiative. Cette manière de procéder augmente considérablement le coût et peut nécessiter l'utilisation d'un lanceur de plus grande capacité.

Le brevet US 8 448 902 décrit un satellite 300 (figure 3) positionné dans un lanceur 310 et qui est composé d'au moins deux modules 320, 330, chaque module comportant quatre faces supportant pour certaines les antennes et les panneaux solaires. Le premier module est configuré avec un premier rapport R₁ de largeur L_{EO}/L_{NS}, le deuxième module 330 avec un deuxième rapport R₂ de largeur L_{EO}/L_{NS}, et la valeur de R₂ est au moins supérieure à 20% de la valeur de R₁ L'expression « panneau étagère » ou « étagère » désigne un même élément connu sous l'expression anglo-saxonne « floor » dans la description qui va suivre.

La demande de brevet US 2003/0057328 décrit un satellite qui présente une forme non uniforme le long de son axe principal.

L'invention concerne un satellite comportant au moins un premier module de communication, un module répéteur, une ou plusieurs antennes, au moins un module de propulsion et un module avionique, le module répéteur est composé d'au moins :
- un premier panneau « nord » lorsque le satellite est dans une position orbitale,
- un deuxième panneau « est »,
- un troisième panneau « sud » et un quatrième panneau « ouest » disposés respectivement à l'opposé du premier panneau « nord » et du deuxième panneau « est »,
- le panneau « nord » et le panneau « sud » ont des largeurs Xmc_{R} dans la direction est-ouest, le panneau est et le panneau « ouest » ont une largeur ou Ymc_{R} dans la direction nord-sud,
- le module répéteur est constitué de plusieurs étagères, l'étagère d'indice k ayant une largeur Xmck dans la direction est-ouest, et la valeur de Xmck varie en fonction de l'étagère k et de sa position dans le module répéteur, et
- la valeur du rapport Xmc_{R}/Ymc_{R} pour le module répéteur est compris dans l'intervalle [0.84; 1.12].

Une étagère a par exemple une première dimension Xmckg et une deuxième dimension Xmckd différentes pour chacun de ses côtés pris dans la direction est-ouest.

La dimension Xmck peut être positionnée par rapport à un axe de symétrie du côté des valeurs positives ou des valeurs négatives tout en vérifiant une valeur Xmc_{R} donnée.

Selon une variante de réalisation, la valeur Ymc_{R} est égale à 2.5m et la valeur de Xmc_{R} varie entre 2.1 et 2.8 m.

Les dimensions pour le module de service peuvent être les suivantes :Xmc égale à 2.4 m et Ymc à 2.5m.

Les antennes peuvent être disposées lorsque le satellite est dans une configuration d'orbite dans une direction est-ouest vis-à-vis du module répéteur.

Le satellite peut comporter des panneaux solaires disposés à proximité des faces sud et nord lors de la phase de lancement.

Les panneaux solaires sont par exemple déployés dans une direction nord ou sud dans une configuration orbitale par rapport aux modules formant le satellite.

D'autres caractéristiques et avantages de la présente invention apparaîtront mieux à la lecture de la description qui suit d'exemples de réalisation donnés à titre illustratif et nullement limitatif annexés des figures qui représentent :
- La figure 1, un schéma de satellite en orbite,
- La figure 2, un schéma du satellite au lancement,
- La figure 3, un exemple de satellite selon l'art antérieur,
- La figure 4, une représentation du maître couple,
- La figure 5, un exemple de réalisation d'un satellite selon l'invention,
- La figure 6A, un exemple de module répéteur ayant un maître couple variable en fonction de la position d'une étagère, la figure 6B, un assemblage possible, et
- La figure 7, un schéma montrant différentes possibilités pour le positionnement des étagères par rapport à un axe milieu.

Un exemple de réalisation va maintenant être donné à titre illustratif et non limitatif pour mieux faire comprendre l'objet de la présente invention. L'idée de la présente invention consiste notamment à proposer un satellite ayant un maître couple du module répéteur du satellite pouvant être adapté à une mission donnée. L'un des objectifs est d'avoir plus ou moins de surface radiative nord/sud et plus ou moins de surface d'aménagement d'antennes en faces est/ouest en fonction de la mission. La taille et le nombre des antennes nécessaires pour mener à bien la mission sont des paramètres connus au préalable.

Sur la figure 4 sont représentées deux dimensions définissant le maître-couple selon les axes X et Y précités. Comme indiqué préalablement, le maître-couple du satellite est la surface vue quand on regarde le satellite selon l'axe Z. La dimension Xmc correspond à la distance séparant un panneau est 150 d'un panneau ouest 130. La dimension Ymc correspond à la distance séparant un panneau nord 120 d'un panneau sud 140. Le module répéteur a une surface MC_{R} (en trait plein) et le module service une surface MC_{S} (en trait pointillés).

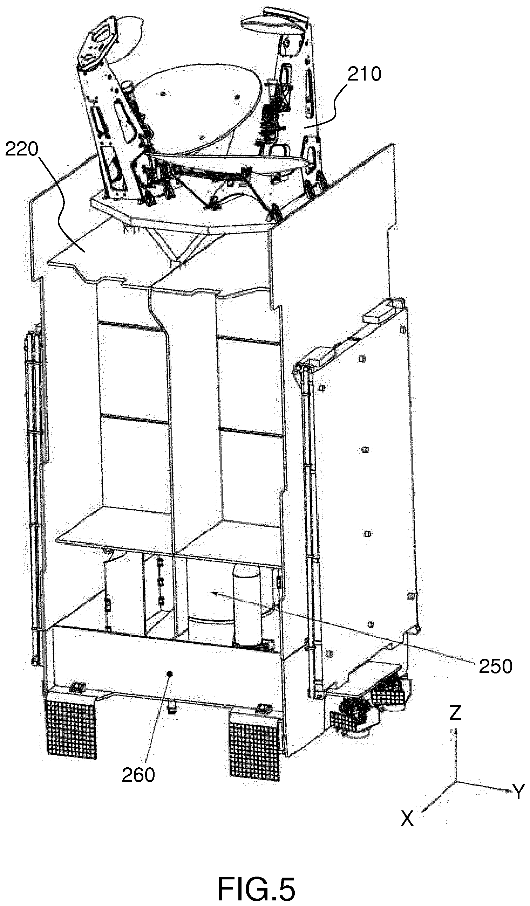

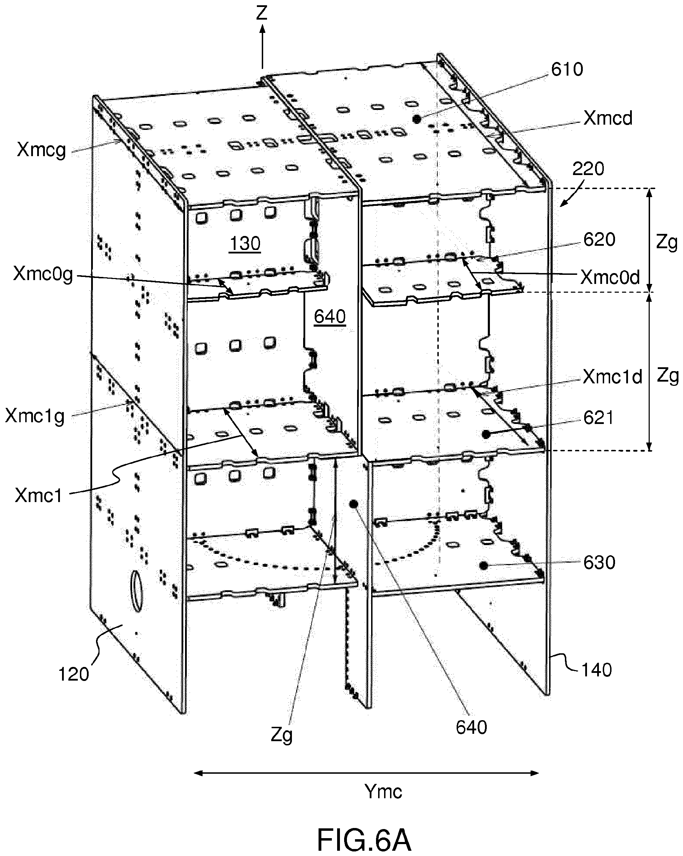

La figure 5 schématise un exemple de réalisation d'un satellite comprenant un module antenne 210, d'un module répéteur 220 dont la structure est détaillée en figure 6A, d'un module de propulsion 250 et d'un module avionique 260.

La figure 6A schématise un module répéteur 220 sensiblement cubique rectangulaire composé d'un premier panneau nord 120, d'un deuxième panneau « est » 150 (non représenté pour des raisons de simplification de figure), d'un troisième panneau « sud » 140 et d'un quatrième panneau « ouest » 130. Le module répéteur comporte aussi un premier panneau étagère haut 610, deux panneaux étagères intermédiaires 620, 621 dans cet exemple de réalisation et un panneau étagère bas 630. Une paroi centrale 640 sépare en deux parties l'espace E formé par deux étagères 610, 620; 620, 621; 621, 630 et deux panneaux nord/sud, 120, 140.

Le maître-couple MC_{S} du module de service 220 (figure 1) est défini par la surface de sa paroi basse situé sous le satellite (face -Z). Le maître couple du module de service MC_{S} est en général de dimension fixe. La dimension Xmcs est par exemple égale à 2.4 m et la dimension de Ymcs est égale à 2.5m.

Le maître-couple du module répéteur MC_{R} est variable, afin de pouvoir adapter ce module à la taille des antennes ou aux appendices latéraux nécessaires pour le bon fonctionnement de la mission.

Le paramètre Ymc_{R} pour le maître couple du module répéteur est par exemple fixé à 2.5 m et correspond à la distance entre le panneau nord 120 et le panneau sud 140. Le paramètre Xmc_{R} pour le maître-couple du module répéteur est variable et peut être compris, par exemple, entre 2.1 et 2.8m. Cette valeur Xmc_{R} peut être différente pour chacune des étagères formant le module répéteur.

Pour le module répéteur, la valeur du rapport des paramètres Xmc_{R}/Ymc_{R} sera choisie dans l'intervalle variant de 0.84 à 1.12.

Sur la figure 6A on a indiqué la dimension Xmc prise dans la largeur ou direction est-ouest 150, 130, pour chacune des étagères qui varie notamment en fonction de son emplacement dans le satellite. Dans le cas où l'on considère l'étagère intermédiaire 621, cette dernière peut avoir une seule dimension Xmc1 dans sa largeur prise dans la direction est-ouest, ou encore une première dimension Xmc1d correspondant à la largeur pour la demi-étagère du côté droit par rapport au plan de la figure, une deuxième dimension Xmc1g pour le côté gauche pris selon la direction X. La lettre d indique le côté droit, g le côté gauche avec la figure devant soi. Il en est de même pour l'étagère 620 qui prend une dimension Xmc0 ou encore deux dimensions Xmc0d, Xmc0g. Les étagères sont séparées par des intervalles de distance Zf considérés selon l'axe Z pouvant varier en fonction de la mission, par exemple entre 0.5m et 1.5m.

De manière plus générale, une étagère d'indice k a au moins une dimension Xmck telle que le rapport Xmck/ Ymck appartient à l'intervalle [0.84, 1.12], avec Ymck la dimension dans la direction nord-sud. Un tel agencement permet notamment d'aménager le satellite en fonction de la mission, du nombre d'antennes, des dimensions des antennes, etc.

Le nombre d'étagères est par exemple au moins égal à trois.

L'exemple donné sur la figure 6A pour l'agencement des étagères se trouve au niveau du panneau est, mais reste valable pour le panneau ouest opposé.

Quelques exemples de positionnement d'étagères sont donnés par rapport au point origine dans le repère X, Y, Z.

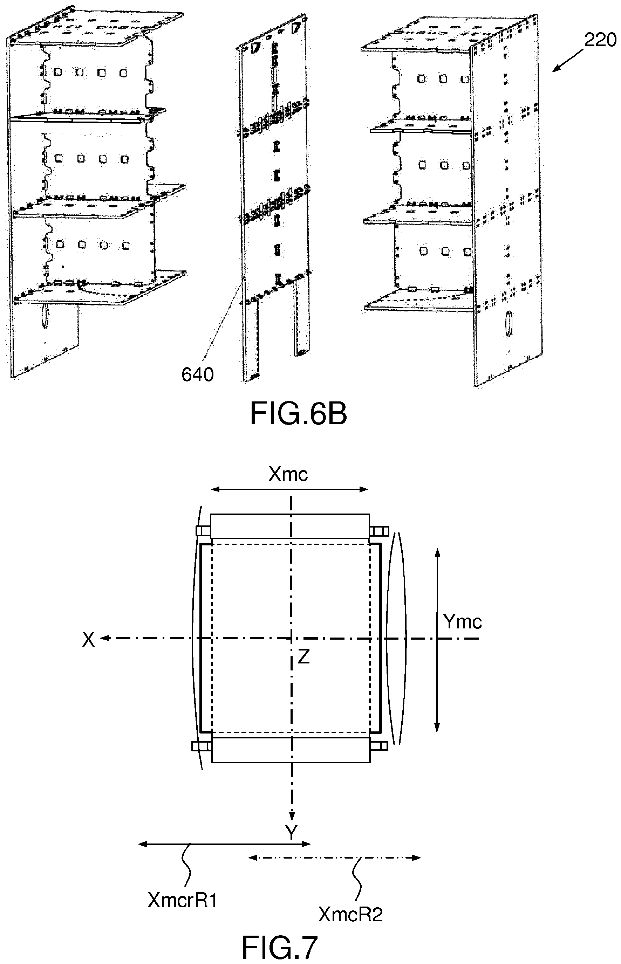

La figure 6B schématise une possibilité pour réaliser l'assemblage du module répéteur.

La figure 7 représente quelques exemples de décalage dans le positionnement des étagères. Par exemple, la valeur de Xm_{CR1} est décalée plus sur le côté des +Xmc, la valeur de Xm_{CR2} est décalée plus sur le côté - Xmc.

Le ou les modules de propulsion équipant le satellite sont, par exemple, de type chimique classique, chimique à Arcjet ou encore de type propulsion électrique/plasma à xénon.

Les antennes utilisées seront par exemple déployées lorsque le satellite sera sur orbite.

Les radiateurs thermiques seront, de préférence, disposés sur les surfaces extérieures des panneaux nord/sud/est/ouest et connectés entre eux, si nécessaire, par des moyens classiquement utilisés dans le domaine.

Le satellite selon l'invention sera par exemple fabriqué en définissant, a priori, un nombre d'options de la structure du module du répéteur. On pourra envisager un nombre de valeurs Xmc données, par exemple 2.1m, 2.3, 2.5 et 2.8 m.

Selon une autre manière de procéder, on définira la structure du module répéteur sous forme paramétrique à l'aide de modèles de conception assistée par ordinateur et de fabrication paramétrées avec le paramètre Xmc sur les différents intervalles entre étagères. Les paramètres XmcR seront ajustés pour chaque satellite fabriqué, avec mise à jour des dossiers, forme des panneaux, etc.

Les caractéristiques données pour le module répéteur s'appliquent aussi dans le cas de satellite comportant plus de quatre panneaux, par exemple 6 ou 8 panneaux.

Un des avantages offert par le satellite à maître-couple variable selon l'invention est qu'il permet de configurer le satellite pour l'adapter à des lanceurs conventionnels.

## Revendications

1. Satellite (100) comportant au moins un premier module de communication (210), un module répéteur (220), une ou plusieurs antennes (270), au moins un module de propulsion (250) et un module avionique (260), le module répéteur (220) est composé d'au moins les éléments suivants :
• un premier panneau nord (120) lorsque le satellite est dans une position orbitale,
• un deuxième panneau est (150),
• un troisième panneau (140) sud et un quatrième panneau (130) ouest disposés respectivement à l'opposé du premier panneau nord (120) et du deuxième panneau est (150),
• le panneau nord et le panneau sud ont des largeurs Xmc_{R} dans la direction est-ouest, le panneau est (150) et le panneau ouest (130) ont une largeur ou Ymc_{R} dans la direction nord-sud,
• la valeur du rapport Xmc_{R}/Ymc_{R} pour le module répéteur (220) est compris dans l'intervalle [0.84; 1.12], **caractérisé en ce que**
• le module répéteur (220) est constitué de plusieurs étagères (620, 621), l'étagère d'indice k ayant une largeur Xmck dans la direction est-ouest, et la valeur de Xmck varie en fonction de l'étagère k et de sa position dans le module répéteur.

2. Satellite selon la revendication 1 **caractérisé en ce qu'**une étagère possède une première dimension Xmckg et une deuxième dimension Xmckd pour chacun de ses côtés pris dans la direction est-ouest.

3. Satellite selon l'une des revendications 1 ou 2 **caractérisé en ce que** la dimension Xmck est positionnée par rapport à un axe de symétrie du côté des valeurs positives ou des valeurs négatives tout en vérifiant une valeur Xmc_{R} donnée.

4. Satellite selon l'une des revendications 1 à 3 **caractérisé en ce que** la valeur Ymc_{R} est égale à 2.5m et la valeur de Xmc_{R} varie entre 2.1 et 2.8 m.

5. Satellite selon l'une des revendications précédentes **caractérisé en ce que** les dimensions pour le module de service sont Xmc égale à 2.4 m et Ymc à 2.5m.

6. Satellite selon l'une des revendications précédentes **caractérisé en ce que** les antennes sont disposées lorsque le satellite est dans une configuration d'orbite dans une direction est-ouest vis-à-vis du module répéteur.

7. Satellite selon l'une des revendications précédentes **caractérisé en ce qu'**il comporte des panneaux solaires disposés à proximité des faces sud et nord lors de la phase de lancement.

8. Satellite selon la revendication 7 **caractérisé en ce que** les panneaux solaires sont déployés dans une direction nord ou sud dans une configuration orbitale par rapport aux modules formant le satellite.

## Patentansprüche

1. Satellit (100), der wenigstens ein erstes Kommunikationsmodul (210), ein Repeater-Modul (220), eine oder mehrere Antennen (270), wenigstens ein Antriebsmodul (250) und ein Luftfahrtmodul (260) umfasst, wobei das Repeater-Modul (220) aus wenigstens den folgenden Elementen zusammengesetzt ist:
• einem ersten Nordpanel (120), wenn der Satellit in einer Orbitalposition ist,
• einem zweiten Ostpanel (150),
• einem dritten Südpanel (140) und einem vierten Westpanel (130), die jeweils gegenüber dem ersten Nordpanel (120) und dem zweiten Ostpanel (150) angeordnet sind,
• wobei das Nordpanel und das Südpanel Breiten Xmc_{R} in der Ost-West-Richtung haben, das Ostpanel (150) und das Westpanel (130) eine Breite oder Ymc_{R} in Nord-Süd-Richtung haben,
• wobei der Wert des Verhältnisses Xmc_{R}/Ymc_{R} für das Repeater-Modul (220) im Intervall [0,84; 1,12] liegt, **dadurch gekennzeichnet, dass**
• das Repeater-Modul (220) aus mehreren Etagen (620, 621) gebildet ist, wobei die Etage mit Index k eine Breite Xmck in der Ost-West-Richtung hat und der Wert von Xmck in Abhängigkeit von der Etage k und ihrer Position im Repeater-Modul variiert.

2. Satellit nach Anspruch 1, **dadurch gekennzeichnet, dass** eine Etage eine erste Dimension Xmckg und eine zweite Dimension Xmckd für jede ihrer Seiten in der Ost-West-Richtung aufweist.

3. Satellit nach Anspruch 1 oder 2, **dadurch gekennzeichnet, dass** die Dimension Xmck in Bezug auf eine Symmetrieachse der Seite der positiven Werte oder der negativen Werte unter Verifizierung eines gegebenen Xmc_{R}-Wertes positioniert ist.

4. Satellit nach einem der Ansprüche 1 bis 3, **dadurch gekennzeichnet, dass** der Wert von Ymc_{R} gleich 2,5 m ist und der Wert von Xmc_{R} zwischen 2,1 und 2,8 m variiert.

5. Satellit nach einem der vorherigen Ansprüche, **dadurch gekennzeichnet, dass** die Dimensionen für das Service-Modul Xmc gleich 2,4 m und Ymc gleich 2,5 m sind.

6. Satellit nach einem der vorherigen Ansprüche, **dadurch gekennzeichnet, dass** die Antennen angeordnet werden, wenn der Satellit in einer Orbitalkonfiguration in einer Ost-West-Richtung gegenüber dem Repeater-Modul ist.

7. Satellit nach einem der vorherigen Ansprüche, **dadurch gekennzeichnet, dass** er Solarpanele umfasst, die in der Startphase in der Nähe der Süd- und Nordflächen angeordnet sind.

8. Satellit nach Anspruch 7, **dadurch gekennzeichnet, dass** die Solarpanele in einer Nord- oder Südrichtung in einer Orbitalkonfiguration in Bezug auf die den Satelliten bildenden Module ausgebreitet werden.

## Claims

1. Satellite (100) comprising at least one first communication module (210), a repeater module (220), one or more antennas (270), at least one propulsion module (250) and an avionics module (260), the repeater module (220) being comprised of at least the following elements:
• a north first panel (120) when the satellite is in an orbital position,
• an east second panel (150),
• a south third panel (140) and a west fourth panel (130) arranged respectively opposite the north first panel (120) and the east second panel (150),
• the north panel and the south panel having widths Xmc_{R} in the east-west direction, the east panel (150) and the west panel (130) having a width or Ymc_{R} in the north-south direction,
• the value of the ratio Xmc_{R}/Ymc_{R} for the repeater module (220) lies within the interval [0.84; 1.12], **characterized in that**
• the repeater module (220) consists of a number of floors (620, 621), the floor of index k having a width Xmck in the east-west direction, and the value of Xmck varies as a function of the floor k and of its position in the repeater module.

2. Satellite according to claim 1, **characterized in that** a floor has a first dimension Xmckg and a second dimension Xmckd for each of its sides taken in the east-west direction.

3. Satellite according to one of claims 1 or 2, **characterized in that** the dimension Xmck is positioned relative to an axis of symmetry of the side of the positive values or of the negative values while verifying a given value Xmc_{R}.

4. Satellite according to one of claims 1 to 3, **characterized in that** the value Ymc_{R} is equal to 2.5 m and the value of Xmc_{R} varies between 2.1 and 2.8 m.

5. Satellite according to one of the preceding claims, **characterized in that** the dimensions for the service module are Xmc equal to 2.4 m and Ymc to 2.5 m.

6. Satellite according to one of the preceding claims, **characterized in that** the antennas are arranged when the satellite is in an orbit configuration in an east-west direction with respect to the repeater module.

7. Satellite according to one of the preceding claims, **characterized in that** it comprises solar panels arranged in proximity to the south and north faces in the launch phase.

8. Satellite according to claim 7, **characterized in that** the solar panels are deployed in a north or south direction in an orbital configuration relative to the modules forming the satellite.
